# EUROPEAN PATENT SPECIFICATION

(11) **EP 2 109 248 B1**
(45) Date of publication and mention of the grant of the patent: **19.06.2013**
(21) Application number: 08773178.2
(22) Date of filing: 11.07.2008
(51) Int. Cl.: G06F 21/00

(54) **METHOD AND DEVICE FOR TESTING CONSISTENCY OF NUMERIC CONTENTS**
VERFAHREN UND VORRICHTUNG ZUR KONSISTENZPRÜFUNG EINES DIGITALEN INHALTS
PROCÉDÉ ET DISPOSITIF POUR TESTER LA COHÉRENCE DE CONTENUS NUMÉRIQUES

(30) Priority: 17.07.2007 CN 200710130287
(43) Date of publication of application: 14.10.2009
(73) Proprietor: Huawei Technologies Co., Ltd., Longgang District, Shenzhen Guangdong 518129 (CN)
(72) Inventor: LI, Qingliang, Longgang District 518129, Shenzhen (CN)
(74) Representative: Kreuz, Georg Maria
(86) International application number: PCT/CN2008/071627
(87) International publication number: WO 2009/010002

(56) References cited:
- EP-A2- 1 271 279
- CN-A- 1 427 635
- CN-A- 1 533 121
- CN-A- 1 642 077
- CN-A- 1 770 696
- CN-A- 1 941 712
- US-A1- 2006 050 964
- CHUN-SHIEN LU ET AL: "Geometric distortion-resilient image hashing scheme and its applications on copy detection and authentication", MULTIMEDIA SYSTEMS, SPRINGER, BERLIN, DE, vol. 11, no. 2, 1 December 2005 (2005-12-01), pages 159-173, XP019349207, ISSN: 1432-1882, DOI: DOI:10.1007/S00530-005-0199-Y
- XIN FAN ET AL: "Photo-to-Search: Using Multimodal Queries to Search the Web from Mobile Devices", PROCEEDINGS OF THE 7TH ACM SIGMM INTERNATIONAL WORKSHOP ON MULTIMEDIA INFORMATION RETRIEVAL, MIR 2005, NOVEMBER 10-11, 2005, SINGAPORE ACM, 2 PENN PLAZA, SUITE 701 - NEW YORK USA, 11 November 2005 (2005-11-11), pages 143-150, XP040031285, ISBN: 1-59593-244-5

## Description

### Field of the Invention

The present invention relates to digital rights management technologies, and in particular, to a method and apparatus for checking consistency between digital contents.

### Background of the Invention

Digital Rights Management (DRM) controls the use of digital contents through rights restriction and content protection schemes, and protects the legal rights of content owners.

The DRM scheme in a conventional art provides an encryption/authorization technology, including: a Content Issuer (CI) encrypts and packs a digital content on the server and delivers the encrypted digital content; a Rights Issuer (RI) issues a license corresponding to the digital content, where the license includes the content encryption key and the corresponding right. The client device can consume the purchased digital content normally when owning both the content package and the license. A user downloads the encrypted digital content and the corresponding license to a DRM agent. The DRM agent decrypts the license by using a private key to obtain the license encryption key and further obtains the content encryption key in the license so as to decrypt the digital content, and controls the user's consumption of the digital content according to the right information in the license.

US2006/050964 A1 discloses an implemention of a comparison between extracted feature data for a candidate content and a reference content. Video frames from both the reference content and candidate content are analyzed and feature data is extracted. In another implementation, the feature data indexed by the reference index and candidate index are compared. A test is performed to determine whether the comparison indicates they match. If the test indicates a match between the extracted feature data, a test is performed to determine whether the last frame of the candidate feature data has been reached. If yes, then there has been a match between the extracted feature data for the reference content and the candidate content.

CHUN-SHIEN LU ET AL "Geometric distortion-resilient image hashing scheme and its application on copy detection and authentication", Multimedia Systems, Springer, Berlin, DE, vol. 11, no. 2, pages 159 to 173, XP01934349207A, discloses a media hashing. Media hashing is recognized as an alternative approach to several applications that were previously performed using digital watermarking. A scenario of copy detection and tracing is given to outline how an image copy detection system needs to find out whether illegal copied of the image exist on the Internet and, if they exist, return a list of suspect URLs.

XIN FAN ET AL, "Phtoto-to-Search: Using Multimodal Queries to Search the Web from Mobile Devices", Proceedings of the 7th ACM SIGMM International Workshop on Multimedia Information Retrieval, MIR 2005, Singapore ACM, pages 143 to 150, XP040031285, discloses a photo-to- search method. In the embodiment, the images in the database are indexed by the integer signatures, the complexity of the searching algorithm is only logarithmic to the total number of images in the database. For the query image that a user submits, the 8x8 DCT coefficient feature is extracted in the same way and the signature is derived from the transformed 32-dimension feature vector. If the candidate image and the query image have the same signature, they are regarded as identical.

### Summary of the Invention

To determine whether a digital content under check is an illegal digital content so as to control the spreading of the digital content effectively, embodiments of the present invention provide a method and apparatus for checking consistency between digital contents.

A method for checking consistency between digital contents includes:
extracting feature values from an original digital content;
extracting feature values from a digital content under check;
comparing the feature values of the original digital content with the feature values of the digital content under check; and
determining whether the digital content under check is consistent with the original digital content according to a comparison result;
wherein the feature values comprise digest feature values and content feature values, the method further comprising:
comparing digest feature values of the original digital content one by one with digest feature values of the digital content under check;
determining the number of digest feature values of the digital content under check that are equal to the digest feature values of the original digital content according to a comparison result; and determining that the digital content under check is consistent with the original content when the number of equal digest feature values exceeds a threshold; and
when the number of equal digest feature values does not exceed the threshold, comparing content feature values of the original digital content one by one with content feature values of the digital content under check; determining the number of content feature values of the digital content under check that are equal to the content feature values of the original digital content according to a comparison result; and determining that the digital content under check is consistent with the original content when the number of equal content feature values exceeds a threshold.

An apparatus for checking consistency between digital contents includes:
a first extracting module, adapted to extract feature values from an original digital content;
a second extracting module, adapted to extract feature values from a digital content under check;
a comparing module, adapted to compare the feature values extracted by the first extracting module from the original digital content with the feature values extracted by the second extracting module from the digital content under check; and
a first determining module, adapted to determine whether the digital content under check is consistent with the original digital content according to a comparison result of the comparing module;
wherein, when there are multiple feature values of the original digital content and multiple feature values of the digital content under check, the comparing module is further adapted to compare the feature values of the original digital content one by one with the feature values of the digital content under check; and
the first determining module comprises:
a third determining unit, adapted to determine the number of feature values of the digital content under check that are equal to the feature values of the original digital content according to a comparison result of the comparing module; and
a fourth determining unit, adapted to determine that the digital content under check is consistent with the original digital content when the number of feature values of the digital content under check that are equal to the feature values of the original digital content exceeds a threshold;
wherein the feature values comprise digest feature values and content feature values, the comparing module further comprises: a first comparing unit, adapted to compare digest feature values of the original digital content one by one with digest feature values of the digital content under check;
the third determining unit is further adapted to determine the number of digest feature values of the digital content under check that are equal to the digest feature values of the original digital content according to a comparison result of the first comparing unit;
the fourth determining unit is further adapted to determine that the digital content under check is consistent with the original digital content when the number of equal digest feature values exceeds the threshold;
the comparing module further comprises: a second comparing unit, adapted to compare content feature values of the original digital content one by one with content feature values of the digital content under check when the number of equal digest feature values does not exceed the threshold;
the third determining unit is further adapted to determine the number of content feature values of the digital content under check that are equal to the content feature values of the original digital content according to a comparison result of the second comparing unit; and
the fourth determining unit is further adapted to determine that the digital content under check is consistent with the original digital content when the number of equal content feature values exceeds the threshold.

A computer program product comprises computer program code, which, when executed by a computer, will cause the computer to perform all steps of any of the method aspects described herein.

According to aspects of the present invention, when it is checked whether a digital content is illegal, feature values are extracted from the original digital content and the digital content under check, and the feature values are compared so as to determine whether the digital content under check is consistent with the original digital content. Then it can be determined whether the digital content under check is illegal according to a user policy.

### Brief Description of the Drawings

FIG. 1 shows a procedure for checking consistency between digital contents according to an embodiment of the invention;
FIG. 2 shows a procedure for extracting digest feature values of a digital content according to an embodiment of the invention;
FIG. 3 shows a procedure for determining consistency between digital contents by means of comparing digest feature values according to an embodiment of the invention;
FIG. 4 shows a procedure for determining consistency between digital contents by means of comparing digest feature values and content feature values according to an embodiment of the invention;
FIG. 5 is a schematic diagram showing how to restrict and screen delivery of an illegal digital content according to an embodiment of the invention;
FIG. 6 shows a procedure for controlling access to a digital content according to an embodiment of the invention; and
FIG. 7A, FIG. 7B, FIG. 7C, FIG. 7D, FIG. 7E, and FIG. 7F show structures of an apparatus for checking consistency between digital contents according to embodiments of the invention.

### Detailed Description of the Embodiments

The inventor of the present invention finds the conventional art is subject to the following weaknesses:
1. The technology requires terminal support and therefore can be used in specific terminals that support the technology. This restricts the range of users. In addition, if a user has different types of terminals, and one of the terminals does not support the technology, the digital contents required by the user are unable to be shared among the terminals. This further hinders the user experience.
2. The technology is highly coupled with the prior system and requires a lot of changes to the conventional system. The cost is high.
3. The security is relatively low. Once an encrypted content package is decrypted by an attacker, the attacker is able to spread the original digital contents without any restriction.

A conventional digital watermark technology includes: creating a digital watermark according to specific information or feature values of a digital content and embedding the digital watermark in the digital content; when the digital content is transmitted over a network of an operator, checking the digital watermark to determine whether the content is legal so as to control the transmission of the digital content.

This technology requires no special terminal change and can be used in all terminals, among which digital contents can be shared. The inventor, however, still finds the technology is subject to the following defects:
1. Because the digital watermark technology controls the transmission process of a digital content, and specifically, controls whether the digital content can be transmitted over the network of the operator, the check process relies on the specific network of the operator to control the transmission of the digital content.
2. To control the transmission of digital contents, all digital contents may be checked in real time or else it is impossible to determine whether a digital content carries a digital watermark. Besides, because the check process is performed during content forwarding, a short check delay and high system performance are required.
3. After a digital watermark is embedded in a digital content, the digital content is distorted and the size of the content is larger, which affect the user experience.

To check whether a digital content is illegal, according to embodiments of the present invention, feature values are extracted from the original digital content and the digital content under check, and the feature values are compared to determine whether the digital content under check is consistent with the original digital content. Then it can be determined whether the digital content under check is illegal according to a user policy.

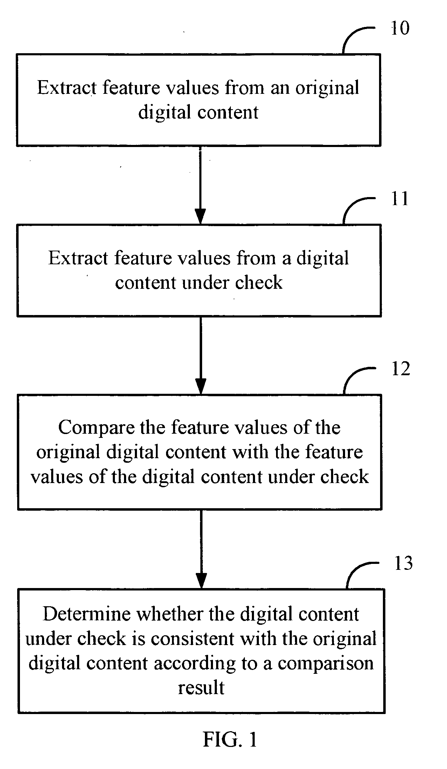

As shown in FIG. 1, a method for checking consistency between digital contents according to an embodiment of the invention includes the following steps:
Block 10: Feature values are extracted from the original digital content.
Block 11: Feature values are extracted from the digital content under check.
Block 12: The feature values of the original digital content are compared with the feature values of the digital content under check.
Block 13: It is determined whether the digital content under check is consistent with the original digital content according to the comparison result.

The original digital content may be obtained in multiples modes. For example, a user may submit the original digital content via a management console which may operate in the form of a website, a Graphical User Interface (GUI) client, or a command line system while providing a DRM interface; or, the user may set a database for storing the original digital content and when it is necessary to obtain the original digital content, obtain the original digital content from the database.

The digital content under check may also be obtained by multiple means. The user may search a network or another storage and forwarding device for the digital content under check according to information related to the original digital content. A conventional search engine may be adopted to implement the search or a digital content collecting engine may be developed based on the conventional art to implement the search. Because the search is performed according to information related to the original digital content, obtaining the digital content under check itself is an initial check on whether the digital content under check is consistent with the original digital content.

The information related to the original digital content may be an identification of the original digital content. The user first obtains the identification of the original digital content and then obtains the digital content under check according to the identification of the original digital content. In practice, the original digital content and the digital content under check should be described with texts and therefore the method is suitable for retrieving and obtaining documents. The identification of the original digital content may be the author, actor, director, media type or media size information of the original digital content, or plot description of the original digital content. One or more identifications may be preset and combined according to a certain logic.

When obtaining the digital content under check from a network, the method may obtain a page that meets the search condition according to the identification information of the original digital content and extract the Universal Resource Identifier (URI) address of the digital content under check, obtain the digital content under check according to the URI and afterwards, extract the feature values. In the case of a streaming media digital content, because the digital content is generally played in real time, after the URI of the digital content under check is extracted, the URI may be stored, and later, when it is necessary to extract the feature values from the digital content under check, the digital content under check is obtained in real time according to the stored URI so as to extract the feature values. The process that the digital content is obtained from a storage and forwarding device is alike.

In the foregoing process, when the digital content under check is extracted according to the identification information of the original digital content, it is unnecessary to resolve the original digital content but necessary to describe the original digital content and the digital content under check with texts. However, for a multimedia digital content, because the information amount is large, it is generally impossible to describe the digital content accurately with identification information. The search accuracy is therefore low and a search result always contains many irrelevant contents. If the specific content of the identification information is strictly defined, the truly required digital content under check may be omitted. An ocean of multimedia digital contents is created every day on the Internet. If the search accuracy is low, a lot of irrelevant digital contents will be searched out and the workloads will be enormous if the contents searched out are further distinguished by human efforts so that the required content cannot be obtained in real time. In another embodiment of the invention, according to a method for checking consistency between digital contents, feature values may be extracted first from the original digital content and then the digital content under check is obtained according to the feature values of the original digital content so that the search is in real time and the accuracy of a search is enhanced.

When extracting feature values from the original digital content, the media type of the original digital content may be determined first and then the feature values are extracted from the original digital content according to the media type of the original digital content. The method for extracting feature values from the digital content under check is similar to that for extracting feature values from the original digital content. Specifically, the media type of the digital content under check may be determined first and then the feature values are extracted from the digital content under check according to the media type of the digital content under check.

Because media types of digital contents include image, audio and video while each media type has multiple coding schemes and multiple file formats, no uniform method is available for extracting feature values of all digital contents. In an embodiment of the invention, a method for extracting feature values with assured system performance for different formats includes the following steps:

### First, Digest feature values are extracted.

In practice, digest feature values of the entire or partial digital content may be extracted and later, by comparing the digest feature values of the original digital content and the digest feature values of the digital content under check, it is determined whether the digital content under check is consistent with the original digital content.

Digital contents are usually media files. A media file includes a file header and a file body, where the file header includes text description information and is easy to be modified. A modified file header generally does not impact the use of the file. In the embodiments of the invention, because a digest feature value of the entire or partial file body is extracted, the digest algorithm may be a public algorithm like Message Digest Algorithm 5 (MD5) and Secure Hash Algorithm 1 (SHA-1). For different digital contents, because the possibility of equal digest feature values is low, once the digest feature values are equal, it can be considered that the digital content under check is consistent with the original digital content.

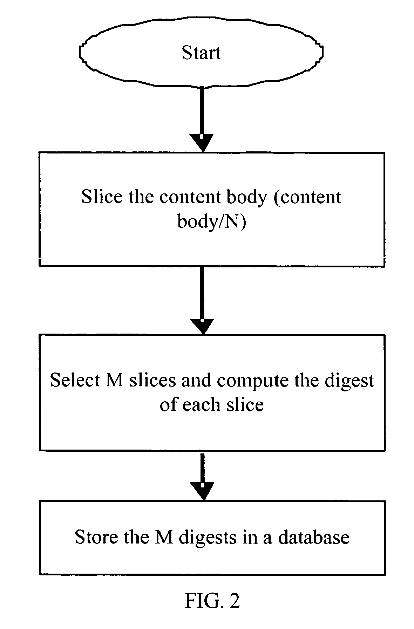

FIG. 2 shows a procedure where the digest feature values of a digital content are extracted. In the procedure, the digital content body is divided to N slices and then M sequential slices are extracted (step size = N/M). A digest feature value is extracted from each of the M slices. The extracted digest feature values may be stored, for example, in a feature value database, as shown in Table 1.

**Table 1**

| Conten tID | Feature Value | | | |
|---|---|---|---|---|
| | 1 | 2 | ... | M |
| CID1 | | | | |
| CID2 | | | | |
| CID3 | | | | |
| ... | | | | |
| ... | | | | |

In Table 1, in this storage-mode, CID means the ID of a digital content and 1-M respectively stand for the digest feature values extracted from the M sequential digital content slices.

### Secondly, Content feature values are extracted.

The content search method varies with the media type of the digital content. The following describes different methods for extracting content feature values specific to different types of digital contents:

### 1. Image content feature values are extracted.

An image presents various visual features, including texture and sub-object spatial relations as well as color and shape. Based on these visual features, common methods for extracting content feature values of an image content include the following ones:
A color feature value is extracted: The color is always closely related to the objects and scene in the image. The color feature is little dependent on the size, direction and view angle of the image and therefore is highly robust.

A texture feature value is extracted: The texture feature is independent on color and brightness and reflects the visual feature of homogeneity. It includes structural arrangement on the image surface and relations with the surrounding environment. Conventionally, a texture is a feature presenting partial irregularity but overall regularity. By submitting an image that carries a certain texture, other images of similar textures can be searched out so as to locate suspicious digital contents.

A shape feature value is extracted: The shape feature is important information for identifying an object. The shape does not change with displacement, rotation and cut. A shape feature value is an important measurement of the image feature.

A spatial feature value is extracted: The color, texture, and shape reflect the overall feature of an image but are unable to reflect objects contained in the image. Actually, locations of objects in the image and spatial relations between the objects are also important features for image search.

The foregoing methods for extracting image content feature values are all mature and therefore are not detailed herein. In practice, one or more methods for extracting image content feature values may be adopted to reduce the omission rate and improve the accuracy of matching.

### 2. Audio content feature values are extracted.

Objects of audio search are waveform audios. Here, audios may be natural sounds like the sound of an automobile engine, rain, or bird, or speeches and music. These audios are searched based on acoustic features. The extraction of audio content feature values may refer to extracting content feature values of the entire audio, or extracting the content feature values of a part of the audio like the background sound or speech.

Before the audio content feature values are extracted, the audio is divided by searching for the transition points of the audio via acoustic analysis on the signal. For divided segments, the climax part may be extracted manually as the content feature values of the audio content or a computer may automatically extract a part according to a preset policy as the content feature values of the audio content.

The acoustic analysis on a signal and the search of transition points are mature technologies and are not detailed herein.

### 3. Video content feature values are extracted.

A complete video is made up of a video track, an audio track and subtitles. The extraction of video content feature values may be the extraction of audio, image and text content feature values. An audio track is an independent audio. The content feature values of an audio track are extracted in a same way as the content feature values of an audio are extracted.

A video signal is a continuous streaming media signal made up of continuous frames. The key frame ,as I frame, of the video may be extracted and the content feature values of the video are then extracted in units of frames. Because the information and data carried in a video signal is huge, the content feature values may be extracted from part of the key frames without the need to extract the content feature values of all key frames.

For a streaming media digital content, because of its huge information, a large storage space is required to obtain the entire content and extract the feature values locally. The cost is high. In an embodiment of the invention, considering that the digital content of a media stream is continuous, a time based fast algorithm is adopted to extract feature values, for example, extracting feature values in a duration. Taking a video stream of IPVIPPVI ... for example, N frames (including I, P and V frames) are carried in the continuous video stream within time T and feature values of the frames in time T are then extracted. Alternatively, the feature values may be extracted at intervals of time.

In an embodiment of the invention, the extracting method includes: extracting feature values from the original digital content within a first duration when determining that the media type of an original digital content is streaming media; extracting feature values from the digital content under check at every interval of a second duration when determining that the media type of a digital content under check is streaming media; comparing the feature values extracted at every interval of the second duration from the digital content under check with all the feature values extracted from the original digital content within the first duration, and determining whether the digital content under check is consistent with the original digital content according to the comparison result. The first duration is longer than the second duration. If there are indeed identical feature values in the digital content under check and the original digital content, at least one of the feature values extracted from the digital content under check at every interval of the second duration is equal to a feature value extracted from the original digital content in the first duration during the comparison.

A feature value extracted from a streaming media digital content may be a digest feature value, or a content feature value. When it is determined that both the original digital content and the digital content under check are streaming media contents, certain frames may be extracted from the original digital content, such as video key frames, and then the feature value of each frame is extracted and stored in sequence. When the feature values are compared, frames in the data stream of the digital content under check that is searched out are obtained in sequence and feature values of the obtained frames are extracted and compared with the stored feature values of the original digital content in sequence. In practice, video key frames may be extracted first from the original digital content in the first duration and then feature values of the key frames of the original digital content are extracted; video key frames are extracted from the digital content under check at every interval of the second duration and then feature values of the key frames of the digital content under check are extracted. Alternatively, content feature values of the P or V frames may be extracted. The I frame is preferred because it contains more information.

For example, features values of all I frames (may include digest feature values and content feature values) may be extracted in one or more continuous T1 periods. When feature values of the digital content under check are extracted, one or more frames are extracted from the data stream of the digital content under check at every interval of T2 and feature values of the frames are extracted. T2 is shorter than T1. If the digital content under check includes a same segment as extracted from the original digital segment in T1, at least one frame extracted in T2 falls within T1. A first I frame may be extracted at every interval of T2, feature values of I frames are computed, and the feature values are compared with the feature values of all I frames extracted in T1. If the number of identical I frame feature values exceeds a threshold, the method considers that the digital content under check is consistent with the original digital content.

To improve the detection rate, in view of inter-system errors, T1 and T2 may be defined according to the actual performance of the system, or the size of T2 may be adjusted dynamically to keep a balance between the system processing performance and the detection rate.

In particular, for audio or video streams on demand, timed play, fast forwarding or fast rewind techniques may be adopted to extract and check feature values of first frames every time a T2 (T2<T1) point is crossed. This guarantees the efficiency and performance of detection without the need to wait. The detection speed is higher and the delay is shorter.

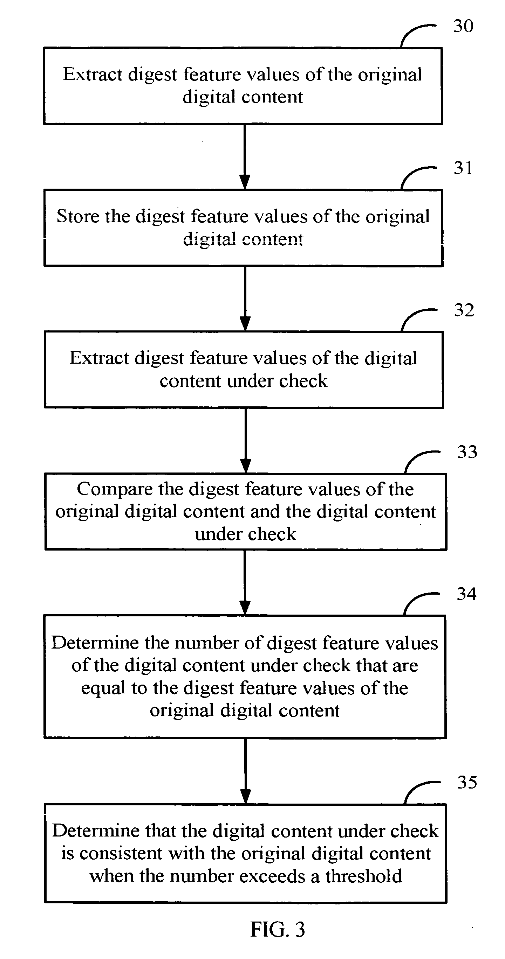

After digest feature values are extracted from the original digital content, the digest feature values extracted from the original digital content may be stored, for example, the digest feature values extracted from the original digital content may be stored in a feature value database. After digests feature values are extracted from the digital content under check, the digest feature values extracted from the digital content under check are compared with the stored digest feature values of the original digital content. Particularly, as shown in FIG. 3, the digest feature values of the original digital content and the digital content under check are compared so as to determine whether the digital content under check is consistent with the original digital content. The procedure according to the embodiment includes the following steps:
Block 30: A original digital content is obtained, a original digital content body of the original digital content is divided into N slices, M slices (step size = N/M) is obtained in sequence, and a digest feature value is extracted from each of the M slices.
Block 31: The digest feature values extracted from the original digital content are stored in sequence.
Block 32: The digital content under check is obtained according to identification information or feature values of the original digital content, the content body of the digital content under check is divided into N slices, M slices (step size = N/M) are obtained in sequence, and a digest feature value is extracted from each of the M slices.
Block 33: The stored digest feature values of the original digital content are compared with the digest feature values of the digital content under check one by one. For example, for CID1, the M digest feature values extracted from the content under check are respectively A[1-M], and the M digest feature values extracted by a first extracting module from the original digital content in advance are B[1-M]. The digest feature values are compared one by one as follows: each element a in set A is compared with each element b in set B one by one, and if it is found that any a=b, a set counter counts up the identical elements.
Block 34: According to the comparison result, the number of digest feature values of the digital content under check that are equal to digest feature values of the original digital content is determined.
Block 35: When the number of digest feature values of the digital content under check that are equal to digest feature values of the original digital content exceeds a threshold, it is determined that the digital content under check is consistent with the original digital content.

However, if one feature value is extracted respectively from the original digital content and the digital content under check, when the comparison shows that the feature values are equal, it can be determined that the digital content under check is consistent with the original digital content. If multiple feature values are extracted respectively from the original digital content and the digital content under check, the feature values extracted from the original digital content are compared one by one with the feature values of the digital content under check. Then according to the comparison result, the number of feature values extracted from the digital content under check that are equal to the feature values of the original digital content is determined, and when the number exceeds the threshold, it is determined that the digital content under check is consistent with the original digital content.

The extracted feature values may be digest feature values or content feature values. In the procedure shown in FIG. 3, the comparison of digest feature values is an accurate comparison. In the procedure of digital content transmission, however, the content is apt to conversion of file format, cut, and editing; if digest feature values are compared, the omission rate is high. In this case, it is necessary to add other check means to intensify the check. In an embodiment of the invention, when the comparison of digest feature values fails, content feature values are further compared.

The digest feature values of the original digital content are first compared one by one with the digest feature values of the digital content under check. Then according to the comparison result, the number of digest feature values extracted from the digital content under check that are equal to the digest feature values of the original digital content is determined, and when the number exceeds a threshold, it is determined that the digital content under check is consistent with the original digital content. If the number of digest feature values extracted from the digital content under check that are equal to the digest feature values of the original digital content does not exceed the threshold, the comparing of the content feature values of the original digital content one by one with the content feature values of the digital content under check continues, and the number of content feature values extracted from the digital content under check that are equal to the content feature values of the original digital content is determined according to the comparison result, and when the number exceeds a threshold, it is determined that the digital content under check is consistent with the original digital content.

In an embodiment of the invention, after determining that the digital content under check is consistent with the original digital content, it may be determined whether the digital content under check is illegal according to a user policy. For example, a user may submit the URI of a legal Service Provider (SP) in advance via a DRM management console. Later, after the digital content under check is obtained, the URI of the digital content under check is extracted and compared with the legal URI submitted by the user. If the URIs are the same, the method considers the digital content under check legal without further extracting and comparing features; if the URIs are different, extracting and comparing of feature values continues, and the digital content under check is deemed as illegal after it is determined that the digital content under check is consistent with the original digital content. Alternatively, the comparison of URIs may be made after the comparison of feature values.

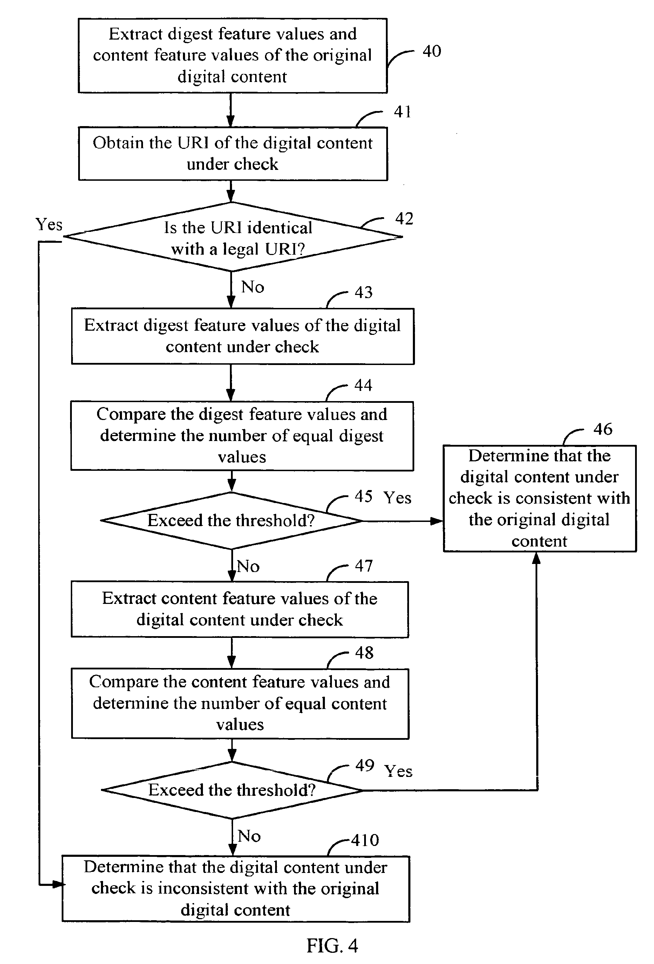

In an embodiment, as shown in FIG. 4, the digest feature values and content feature values of the original digital content and the digital content under check are compared so as to determine whether the digital content under check is consistent with the original digital content. The procedure according to the embodiment includes the following steps:
Block 40: The original digital content is obtained, and feature values are extracted from the original digital content and stored, the feature values including digest feature values and content feature values.
Block 41: The URI of the digital content under check is obtained according to the identification information or feature values of the original digital content.
Block 42: The URI of the digital content under check is compared with the legal URI submitted by the user in advance; if the URIs are identical, the procedure proceeds to block 410 and ends; otherwise, the procedure proceeds to block 43.
Block 43: Attributes of the digital content and the digital content are obtained according to the URI of the digital content under check and the media type of the digital content under check is determined according to the attributes, where the media type may be image, audio, video, game, document. Digest feature values are extracted according to the media type of the digital content under check.
Block 44: The extracted digest feature values are compared with the previously stored digest feature values of the original digital content to determine the number of equal digest feature values.
Block 45: It is determined whether the number of equal digest feature values exceeds a defined threshold, and if so, the procedure proceeds to block 46; otherwise, the procedure proceeds to block 47.
Block 46: It is determined that the digital content under check is consistent with the original digital content, the digital content under check is deemed as illegal. The digital content under check, its URI, and the identification information or feature values of the original digital content used for obtaining the digital content under check may be stored, for example, filed in a suspicious digital content database. When the information is filed, the consistency grade between the digital content under check and the original digital content may be determined according to the number of feature values of the digital content under check that are equal to the feature values of the original digital content. For example, the consistency may be graded according the proportion of equal digest feature values. The larger the proportion, the higher the consistency grade, and the closer the digital content under check is to the original digital content, which means that the digital content under check is more suspicious.
Block 47: When the number of equal digest feature values does not exceed a defined proportion, content feature values of the digital content under check are extracted.
Block 48: The content feature values of the digital content under check are compared with the stored content feature values of the original digital content to determine the number of equal content feature values.
Block 49: It is determined whether the number of equal content feature values exceeds a defined threshold. If the number of equal content feature values exceeds the defined threshold, the procedure proceeds to block 46, the digital content under check is deemed as a suspicious illegal content, and then the digital content under check is stored, its URI, and the identification information or feature values of the original digital content are used for obtaining the digital content under check, and the consistency grade between the digital content under check and the original digital content is determined according to the number of equal digest feature values. If the number of equal content feature values does not exceed the threshold, the procedure proceeds to block 410 and ends, determining that the digital content under check is inconsistent with the original digital content and the digital content under check is legal.

Alternatively, after determining the consistency grade between the digital content under check and the original digital content, the digital contents stored in the suspicious digital content database may be identified manually. The more suspicious digital contents may be identified in precedence according to the consistency grade. Alternatively, when a digital content under check is stored in the suspicious digital content database, some segments of the content may be recorded without the need to store the entire digital content.

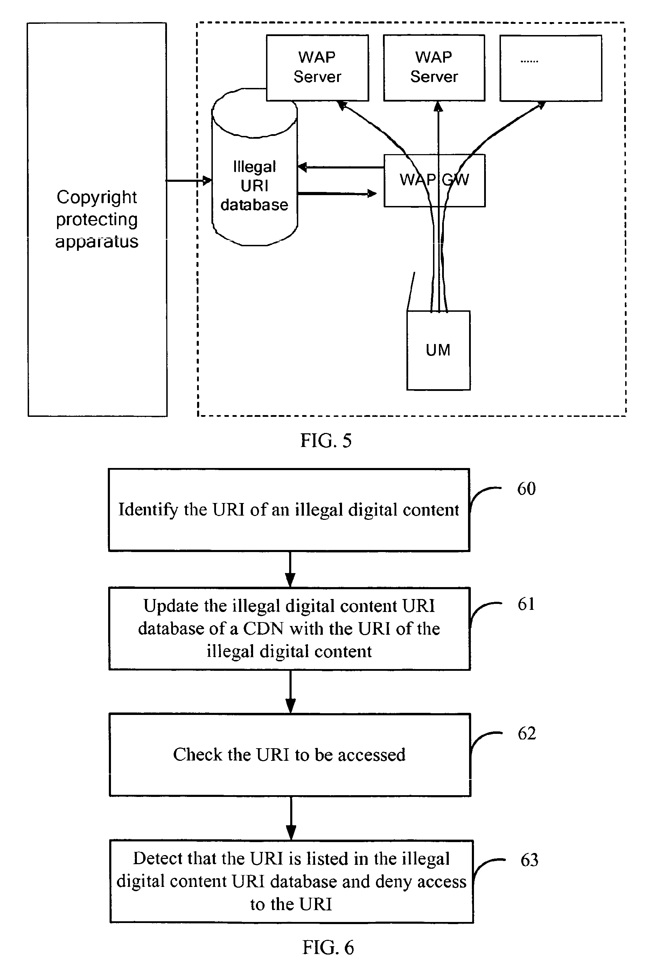

After the digital content under check is determined as consistent with the original digital content, it may be determined, according to the address of the digital content under check, that digital contents from this address are consistent with original digital contents, or alternatively, access to the address may be rejected. In an embodiment of the invention, as shown in FIG. 5, for a digital content determined as illegal, the URI of the illegal digital content is sent to a Content Delivery Network (CDN) via an interface between the management console and the CDN and the CDN will restrict and screen the delivery of the illegal digital content.

In a mobile system, the illegal URI may be sent to a Wireless Application Protocol Gateway (WAP GW) or another WAP controller and the WAP GW will screen the illegal URI and restrict access to the illegal URI so as to protect benefits of the legal content owner.

In an embodiment of the invention, as shown in FIG. 6, a procedure where access to a digital content is controlled includes the following steps:
Block 60: The URI of an illegal digital content is identified in the process provided in the previous embodiment.
Block 6I : The illegal digital content URI database of the CDN updated with the URI of the illegal digital content.
Block 62: When a terminal requests access to the URI, the URI is checked to determine whether the URI is listed in the illegal digital content URI database. In a mobile WAP system, for example, when a terminal attempts to access the URI via a WAP GW, the WAP GW checks the URI.
Block 63: If the URI is found in the illegal content URI database, the access to the URI is denied to restrict the transmission of illegal digital contents.

In an embodiment of the invention, after feature values are extracted from the original digital content, the feature values of the original digital content are stored; after the digital content under check is determined as consistent with the original digital content, the stored feature values of the original digital content are replaced with the feature values of the digital content under check so as to check the consistency of subsequent digital contents. For example, after a digital content is identified as an illegal or piratical content which has been edited, altered or cut, the feature values of the original digital content are replaced by the feature values of the illegal or piratical content as feature values for later comparison, so that similar suspicious URIs will be detected when feature values are extracted with a higher detection rate.

To sum up, according to an method for checking consistency between digital contents provided in the embodiments of the invention, for checking whether a digital content is illegal, an feature values are extracted from the original digital content, an feature values are extracted from the digital content under check, the feature values of the original digital content are compared with the feature values of the digital content under check, it is determined whether the digital content under check is consistent with the original digital content according to the comparison result, and it is further determined whether the digital content under check is illegal according to a user policy. Because feature values are extracted directly from the original content and the content under check, it is unnecessary to embed other information in a digital content. The size of a digital content is not altered and the user experience is not impacted. Besides, the check process is independent of the content transmission process without relying on a specific network while real-time check is unnecessary. In addition, the extraction and comparison of feature values are independent of the terminal so that the prior terminal need not be changed. The cost for implementation of the method is low. Because no encryption or authorization technology is adopted, it is impossible that an attacker cracks an encrypted content package and transmits the package illegally. The security is high and the benefits of the copyright owner of the digital content are effectively protected.

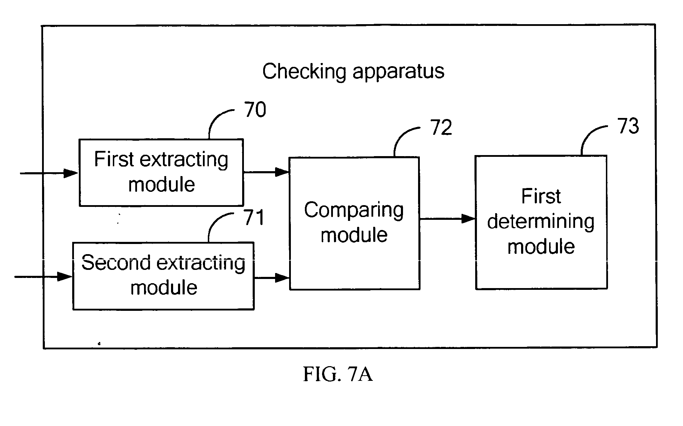

Based on the same idea, an embodiment of the invention provides an apparatus for checking consistency between digital contents. As shown in FIG. 7A, the apparatus includes a first extracting module 70, a second extracting module 71, a comparing module 72 and a first determining module 73. The first extracting module 70 is adapted to extract feature values from an original digital content; the second extracting module 71 is adapted to extract feature values from a digital content under check; the comparing module 72 is adapted to compare the feature values of the original digital content and the feature values of the digital content under check; the first determining module 73 is adapted to determine whether the digital content under check is consistent with the original digital content according to the comparison result.

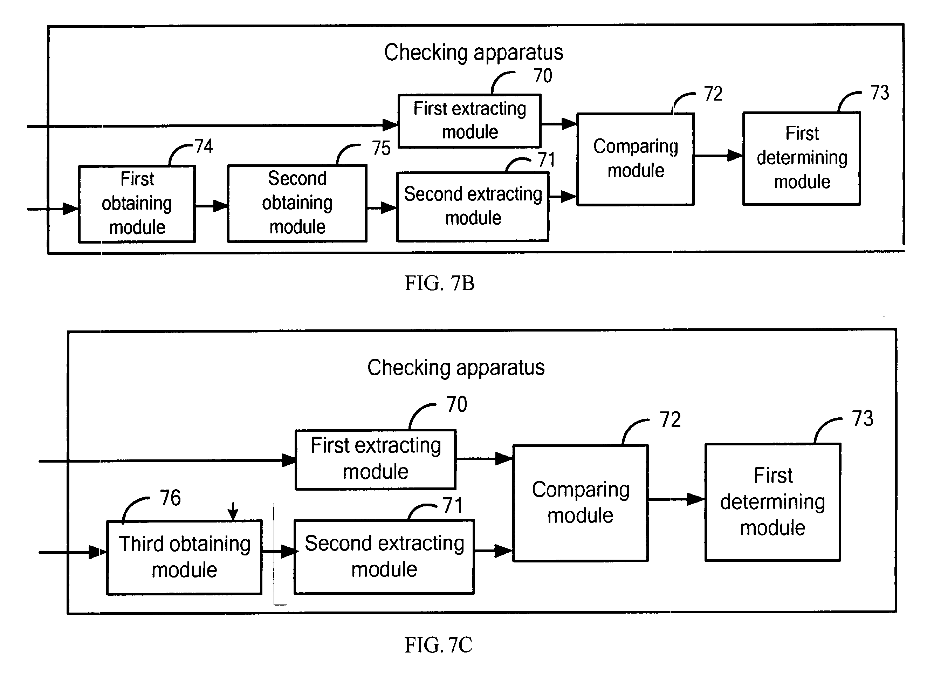

As shown in FIG. 7B, the apparatus shown in FIG. 7A may further include: a first obtaining module 74, adapted to obtain identification information of the original digital content; and a second obtaining module 75, adapted to obtain the digital content under check according to the identification information of the original digital content. Or, as shown in FIG. 7C, the apparatus shown in FIG. 7A may further include: a third obtaining module 76, adapted to obtain the digital content under check according to the feature values of the original digital content.

In the apparatus as shown in FIG. 7A, the first extracting module 70 may include: a first determining unit 701, adapted to determine the media type of the original digital content; and a first extracting unit 702, adapted to extract feature values from the original digital content according to the media type of the original digital content. The second extracting module 71 may include: a second determining unit 711, adapted to determine the media type of the digital content under check; and a second extracting unit 712, adapted to extract feature values from the digital content under check according to the media type of the digital content under check. The first determining unit 701 may be further adapted to determine the media type of the original digital content as streaming media; the first extracting unit 702 may be further adapted to extract feature values from the original digital content within a first duration; the second determining unit 711 may be further adapted to determine the media type of the digital content under check as streaming media; the second extracting unit 712 may be further adapted to extract feature values from the digital content under check at every interval of a second duration, wherein, the first duration is longer than the second duration.

The first extracting unit 702 may further include: a first extracting subunit 7021, adapted to extract video key frames from the original digital content within the first duration; and a second extracting subunit 7022, adapted to extract feature values of the video key frames of the original digital content. The second extracting unit 712 may further include: a third extracting subunit 7121, adapted to extract video key frames from the digital content under check at every interval of the second duration; and a fourth extracting subunit 7122, adapted to extract feature values of the video key frames of the digital content under check.

The comparing module 72 may be further adapted to compare the feature values extracted from the digital content under check at every interval of the second duration with all the feature values extracted from the original digital content within the first duration.

When there are respectively multiple feature values of the original digital content and the digital content under check, the comparing module 72 is further adapted to compare the feature values of the original digital content with the feature values of the digital content under check one by one; in this case, the first determining module 73 includes: a third determining unit 731, adapted to determine the number of feature values of the digital content under check that are equal to the feature values of the original digital content; and a fourth determining unit 732, adapted to determine that the digital content under check is consistent with the original digital content when the number of feature values of the digital content under check that are equal to the feature values of the original digital content exceeds a threshold.

When feature values include digest feature values and content feature values, the comparing module 72 may include: a first comparing unit 721, adapted to compare digest feature values of the original digital content with digest feature values of the digital content under check one by one; in this case, the third determining unit 731 is further adapted to determine, according to the comparison result, the number of digest feature values of the digital content under check that are equal to the digest feature values of the original digital content; the fourth determining unit 732 is adapted to determine that the digital content under check is consistent with the original digital content when the number of digest feature values of the digital content under check that are equal to the digest feature values of the original digital content exceeds a threshold. The comparing module 72 may also include: a second comparing unit 722, adapted to compare content feature values of the original digital content with content feature values of the digital content under check one by one when the number of equal digest feature values does not exceed the threshold; in this case, the third determining unit 731 is further adapted to determine the number of content feature values of the digital content under check that are equal to the content feature values of the original digital content according to the comparison result; the fourth determining unit 732 is adapted to determine that the digital content under check is consistent with the original digital content when the number of content feature values of the digital content under check that are equal to the content feature values of the original digital content exceeds a threshold.

The third determining unit 731 may be further adapted to determine, according to the number of feature values of the digital content under check that are equal to the feature values of the original digital content, the grade of consistency between the digital content under check and the original digital content.

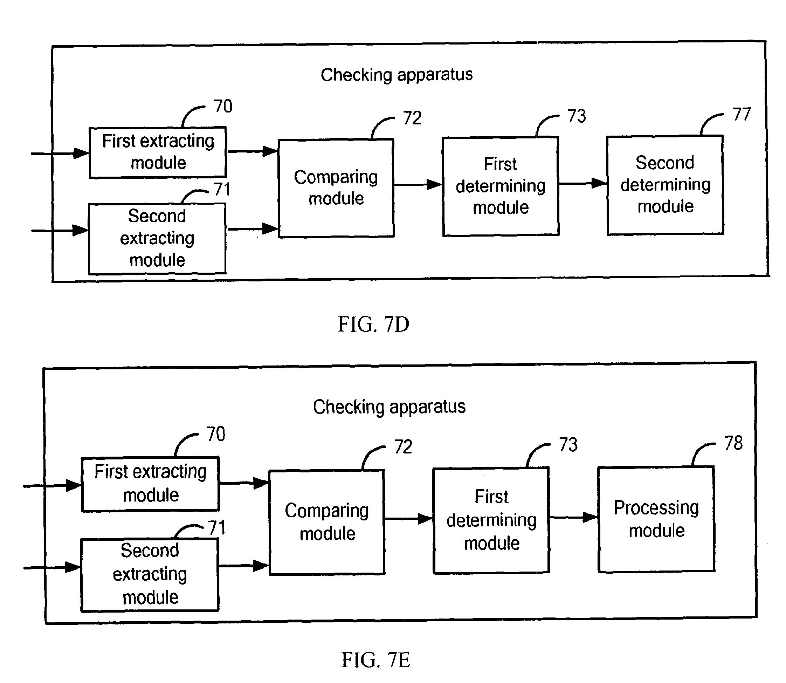

As shown in FIG. 7D, the apparatus shown in FIG. 7A may further include a second determining module 77, adapted to determine, according to the address of the digital content under check, that the digital content from the address is consistent with the original digital content.

As shown in FIG. 7E, the apparatus shown in FIG. 7A may further include a processing module 78, adapted to reject access to the address according to the address of the digital content under check.

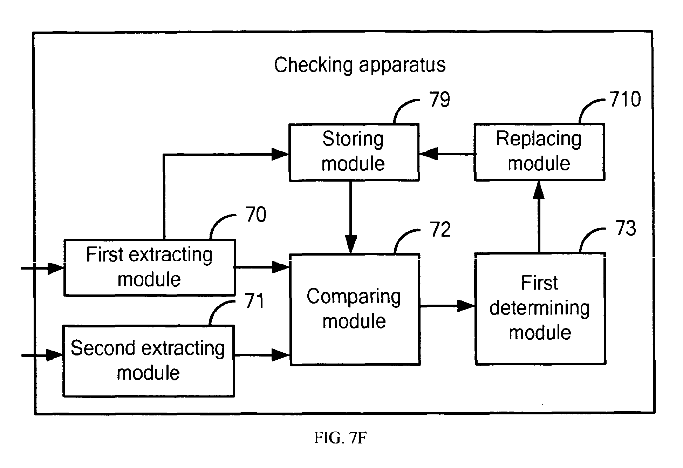

As shown in FIG. 7F, the apparatus shown in FIG. 7A may further include a storing module 79, adapted to store feature values of the original digital content, where the comparing module 72 is further adapted to compare feature values of the digital content under check with the stored feature values of the original digital content; and a replacing module 710, adapted to replace the stored feature values of the original digital content with the feature values of the digital content under check after determining that the digital content under check is consistent with the original digital content.

Those skilled in the art may understand that all or part of the steps in the method provided in the foregoing embodiments of the invention may be implemented by hardware following instructions of a program. The program may be stored in a computer readable storage medium, such as a Read-Only Memory (ROM), a Random Access Memory (RAM), a magnetic disk or a compact disk.

In the embodiments of the invention, to check whether a digital content is illegal, according to the method for checking consistency between digital contents, feature values are extracted from the original digital content, feature values are extracted from the digital content under check, the feature values of the original digital content are compared with the feature values of the digital content under check, and it is determined, according to the comparison result, whether the digital content under check is consistent with the original digital content, and it is further determined whether the digital content under check is illegal according to a user policy. On the one hand, the present invention is different from the conventional digital watermark technology. Because feature values are extracted directly from the original content and the content under check, it is unnecessary to embed other information in a digital content; therefore, the size of a digital content is not altered and the user experience is not impacted. Besides, the check process is independent of the content transmission process without relying on a specific network while real-time check is unnecessary. On the other hand, the present invention differs from the conventional encryption/authorization technology. The extraction and comparison of feature values are independent of the terminal so that a conventional terminal need not be changed. The cost for implementation of the method is low and it is impossible that an attacker decrypts an encrypted content package and transmits the package illegally. The security is higher and the benefits of the copyright owner of the digital content are effectively protected.

In addition, in the embodiments of the invention, it is determined during the check process how suspicious the digital content under check is. The extraction and comparison of digest feature values may be combined with the extraction and comparison of content feature values to determine the grade of consistency between digital contents. This improves the performance and accuracy of detection. When streaming media digital contents are checked, adoption of a fast algorithm may further enhance the system performance. For a digital content determined illegal, the URI of the illegal digital content may be sent to a CDN via an interface between the management console and the CDN and the CDN will restrict and screen the delivery of the illegal digital content.

Although the present invention has been described through some exemplary embodiments, the invention is not limited to such embodiments. It is apparent that those skilled in the art can make various modifications and variations without departing from the scope of the invention as defined by the following claims.

## Claims

1. A method for checking consistency between digital contents, comprising:
extracting (10) feature values from an original digital content;
extracting (11) feature values from a digital content under check;
comparing (12) the feature values of the original digital content with the feature values of the digital content under check; and
determining (13) whether the digital content under check is consistent with the original digital content according to a comparison result;
wherein the feature values comprise digest feature values and content feature values, the method further comprising:
comparing digest feature values of the original digital content one by one with digest feature values of the digital content under check;
determining the number of digest feature values of the digital content under check that are equal to the digest feature values of the original digital content according to a comparison result; and determining that the digital content under check is consistent with the original content when the number of equal digest feature values exceeds a threshold; and
when the number of equal digest feature values does not exceed the threshold, comparing content feature values of the original digital content one by one with content feature values of the digital content under check; determining the number of content feature values of the digital content under check that are equal to the content feature values of the original digital content according to a comparison result; and determining that the digital content under check is consistent with the original content when the number of equal content feature values exceeds a threshold.,

2. The method of claim 1, further comprising:
when there are multiple feature values of the original digital content and multiple feature values of the digital content under check, comparing the feature values of the original digital content one by one with the feature values of the digital content under check;
determining the number of feature values of the digital content under check that are equal to the feature values of the original digital content according to a comparison result; and
determining that the digital content under check is consistent with the original digital content when the number of feature values of the digital content under check that are equal to the feature values of the original digital content exceeds a threshold.

3. An apparatus for checking consistency between digital contents, comprising:
a first extracting module (70), adapted to extract feature values from an original digital content;
a second extracting module (71), adapted to extract feature values from a digital content under check;
a comparing module (72), adapted to compare the feature values extracted by the first extracting module (70) from the original digital content with the feature values extracted by the second extracting module (71) from the digital content under check; and
a first determining module (73), adapted to determine that the digital content under check is consistent with the original digital content according to a comparison result of the comparing module (72);
wherein, when there are multiple feature values of the original digital content and multiple feature values of the digital content under check, the comparing module (72) is further adapted to compare the feature values of the original digital content one by one with the feature values of the digital content under check; and
the first determining module (73) comprises:
a third determining unit (731), adapted to determine the number of feature values of the digital content under check that are equal to the feature values of the original digital content according to a comparison result of the comparing module (72); and
a fourth determining unit (732), adapted to determine that the digital content under check is consistent with the original digital content when the number of feature values of the digital content under check that are equal to the feature values of the original digital content exceeds a threshold;
wherein the feature values comprise digest feature values and content feature values, the comparing module (72) further comprises: a first comparing unit (721), adapted to compare digest feature values of the original digital content one by one with digest feature values of the digital content under check;
the third determining unit (731) is further adapted to determine the number of digest feature values of the digital content under check that are equal to the digest feature values of the original digital content according to a comparison result of the first comparing unit (721);
the fourth determining unit (732) is further adapted to determine that the digital content under check is consistent with the original digital content when the number of equal digest feature values exceeds the threshold;
the comparing module (72) further comprises: a second comparing unit (722), adapted to compare content feature values of the original digital content one by one with content feature values of the digital content under check when the number of equal digest feature values does not exceed the threshold;
the third determining unit (731) is further adapted to determine the number of content feature values of the digital content under check that are equal to the content feature values of the original digital content according to a comparison result of the second comparing unit (722); and
the fourth determining unit (732) is further adapted to determine that the digital content under check is consistent with the original digital content when the number of equal content feature values exceeds the threshold.

4. A computer program product, comprising computer program code, which, when executed by a computer unit, will cause the computer unit to perform the steps of any one of claims 1- 2.

## Patentansprüche

1. Verfahren zum Prüfen der Konsistenz zwischen digitalen Inhalten, das Folgendes umfasst:
Extrahieren (10) von Merkmalswerten aus einem ursprünglichen digitalen Inhalt;
Extrahieren (11) von Merkmalswerten aus einem momentan geprüften digitalen Inhalt;
Vergleichen (12) der Merkmalswerte des ursprünglichen digitalen Inhalts mit den Merkmalswerten des momentan geprüften digitalen Inhalts; und
Bestimmen (13), ob der momentan geprüfte digitale Inhalt mit dem ursprünglichen digitalen Inhalt konsistent ist, in Übereinstimmung mit einem Vergleichsergebnis;
wobei die Merkmalswerte Übersichtsmerkmalswerte und Inhaltsmerkmalswerte enthalten, wobei das Verfahren ferner Folgendes umfasst:
Vergleichen von Übersichtsmerkmalswerten des ursprünglichen digitalen Inhalts einen nach dem anderen mit Übersichtsmerkmalswerten des momentan geprüften digitalen Inhalts;
Bestimmen der Anzahl von Übersichtsmerkmalswerten des momentan geprüften digitalen Inhalts, die gleich den Übersichtsmerkmalswerten des ursprünglichen digitalen Inhalts sind, in Übereinstimmung mit einem Vergleichsergebnis; und Bestimmen, dass der momentan geprüfte digitale Inhalt mit dem ursprünglichen Inhalt konsistent ist, wenn die Anzahl gleicher Übersichtsmerkmalswerte einen Schwellenwert überschreitet; und
wenn die Anzahl gleicher Übersichtsmerkmalswerte den Schwellenwert nicht überschreitet, Vergleichen von Inhaltsmerkmalswerten des ursprünglichen digitalen Inhalts einen nach dem anderen mit Inhaltsmerkmalswerten des momentan geprüften digitalen Inhalts; Bestimmen der Anzahl von Inhaltsmerkmalswerten des momentan geprüften digitalen Inhalts, die gleich den Inhaltsmerkmalswerten des ursprünglichen digitalen Inhalts sind, in Übereinstimmung mit einem Vergleichsergebnis; und
Bestimmen, dass der momentan geprüfte digitale Inhalt mit dem ursprünglichen Inhalt konsistent ist, wenn die Anzahl gleicher Inhaltsmerkmalswerte einen Schwellenwert überschreitet.

2. Verfahren nach Anspruch 1, das ferner Folgendes umfasst:
wenn mehrere Merkmalswerte des ursprünglichen digitalen Inhalts und mehrere Merkmalswerte des momentan geprüften digitalen Inhalts vorhanden sind, Vergleichen der Merkmalswerte des ursprünglichen digitalen Inhalts einen nach dem anderen mit den Merkmalswerten des momentan geprüften digitalen Inhalts;
Bestimmen der Anzahl von Merkmalswerten des momentan geprüften digitalen Inhalts, die gleich den Merkmalswerten des ursprünglichen digitalen Inhalts sind, in Übereinstimmung mit einem Vergleichsergebnis; und
Bestimmen, dass der momentan geprüfte digitale Inhalt mit dem ursprünglichen digitalen Inhalt konsistent ist, wenn die Anzahl von Merkmalswerten des momentan geprüften digitalen Inhalts, die gleich den Merkmalswerten des ursprünglichen digitalen Inhalts sind, einen Schwellenwert überschreitet.

3. Vorrichtung zum Prüfen der Konsistenz zwischen digitalen Inhalten, die Folgendes umfasst:
ein erstes Extraktionsmodul (70), das dafür ausgelegt ist, aus einem ursprünglichen digitalen Inhalt Merkmalswerte zu extrahieren;
ein zweites Extraktionsmodul (71), das dafür ausgelegt ist, aus einem momentan geprüften digitalen Inhalt Merkmalswerte zu extrahieren;
ein Vergleichsmodul (72), das dafür ausgelegt ist, die durch das erste Extraktionsmodul (70) aus dem ursprünglichen digitalen Inhalt extrahierten Merkmalswerte mit den durch das zweite Extraktionsmodul (71) aus dem momentan geprüften digitalen Inhalt extrahierten Merkmalswerten zu vergleichen; und
ein erstes Bestimmungsmodul (73), das dafür ausgelegt ist, in Übereinstimmung mit einem Vergleichsergebnis des Vergleichsmoduls (72) zu bestimmen, dass der momentan geprüfte digitale Inhalt mit dem ursprünglichen digitalen Inhalt konsistent ist;
wobei, wenn mehrere Merkmalswerte des ursprünglichen digitalen Inhalts und mehrere Merkmalswerte des momentan geprüften digitalen Inhalts vorhanden sind, das Vergleichsmodul (72) ferner dafür ausgelegt ist, die Merkmalswerte des ursprünglichen digitalen Inhalts einen nach dem anderen mit den Merkmalswerten des momentan geprüften digitalen Inhalts zu vergleichen; und
das erste Bestimmungsmodul (73) Folgendes umfasst:
eine dritte Bestimmungseinheit (731), die dafür ausgelegt ist, in Übereinstimmung mit einem Vergleichsergebnis des Vergleichsmoduls (72) die Anzahl von Merkmalswerten des momentan geprüften digitalen Inhalts, die gleich den Merkmalswerten des ursprünglichen digitalen Inhalts sind, zu bestimmen; und
eine vierte Bestimmungseinheit (732), die dafür ausgelegt ist, zu bestimmen, dass der momentan geprüfte digitale Inhalt mit dem ursprünglichen digitalen Inhalt konsistent ist, wenn die Anzahl von Merkmalswerten des momentan geprüften digitalen Inhalts, die gleich den Merkmalswerten des ursprünglichen digitalen Inhalts sind, einen Schwellenwert überschreitet;
wobei die Merkmalswerte Übersichtsmerkmalswerte und Inhaltsmerkmalswerte enthalten, wobei das Vergleichsmodul (72) ferner Folgendes umfasst: eine erste Vergleichseinheit (721), die dafür ausgelegt ist, Übersichtsmerkmalswerte des ursprünglichen digitalen Inhalts einen nach dem anderen mit Übersichtsmerkmalswerten des momentan geprüften digitalen Inhalts zu vergleichen;
die dritte Bestimmungseinheit (731) ferner dafür ausgelegt ist, in Übereinstimmung mit einem Vergleichsergebnis der ersten Vergleichseinheit (721) die Anzahl von Übersichtsmerkmalswerten des momentan geprüften digitalen Inhalts, die gleich den Übersichtsmerkmalswerten des ursprünglichen digitalen Inhalts sind, zu bestimmen;
die vierte Bestimmungseinheit (732) ferner dafür ausgelegt ist, zu bestimmen, dass der momentan geprüfte digitale Inhalt mit dem ursprünglichen digitalen Inhalt konsistent ist, wenn die Anzahl gleicher Übersichtsmerkmalswerte den Schwellenwert überschreitet;
das Vergleichsmodul (72) ferner Folgendes umfasst: eine zweite Vergleichseinheit (722), die dafür ausgelegt ist, Inhaltsmerkmalswerte des ursprünglichen digitalen Inhalts einen nach dem anderen mit Inhaltsmerkmalswerten des momentan geprüften digitalen Inhalts zu vergleichen, wenn die Anzahl gleicher Übersichtsmerkmalswerte den Schwellenwert nicht überschreitet;
die dritte Bestimmungseinheit (731) ferner dafür ausgelegt ist, in Übereinstimmung mit einem Vergleichsergebnis der zweiten Vergleichseinheit (722) die Anzahl von Inhaltsmerkmalswerten des momentan geprüften digitalen Inhalts, die gleich den Inhaltsmerkmalswerten des ursprünglichen digitalen Inhalts sind, zu bestimmen; und
die vierte Bestimmungseinheit (732) ferner dafür ausgelegt ist, zu bestimmen, dass der momentan geprüfte digitale Inhalt mit dem ursprünglichen digitalen Inhalt konsistent ist, wenn die Anzahl gleicher Inhaltsmerkmalswerte den Schwellenwert überschreitet.

4. Computerprogrammprodukt, das Computerprogrammcode enthält, der, wenn er von einer Computereinheit ausgeführt wird, die Computereinheit dazu veranlasst, die Schritte nach einem der Ansprüche 1-2 auszuführen.

## Revendications

1. Procédé permettant de vérifier la cohérence de contenus numériques, le procédé comprenant les étapes consistant à :
extraire (10) des valeurs de caractéristiques d'un contenu numérique d'origine ;
extraire (11) des valeurs de caractéristiques d'un contenu numérique soumis à vérification ;
comparer (12) les valeurs de caractéristiques du contenu numérique d'origine aux valeurs de caractéristiques du contenu numérique soumis à vérification ; et
déterminer (13) si le contenu numérique soumis à vérification est cohérent avec le contenu numérique d'origine en fonction d'un résultat de comparaison ;
lesquelles valeurs de caractéristiques comprennent des valeurs de caractéristiques de condensé et des valeurs de caractéristiques de contenu,
le procédé comprenant en outre les étapes consistant à :
comparer une à une des valeurs de caractéristiques de condensé du contenu numérique d'origine à des valeurs de caractéristiques de condensé du contenu numérique soumis à vérification ;
déterminer le nombre de valeurs de caractéristiques de condensé du contenu numérique soumis à vérification qui sont égales aux valeurs de caractéristiques de condensé du contenu numérique d'origine en fonction d'un résultat de comparaison ;
et déterminer que le contenu numérique soumis à vérification est cohérent avec le contenu d'origine si le nombre de valeurs de caractéristiques de condensé égales excède un certain seuil ; et
si le nombre de valeurs de caractéristiques de condensé égales n'excède pas le seuil, comparer une à une des valeurs de caractéristiques de contenu du contenu numérique d'origine à des valeurs de caractéristiques de contenu du contenu numérique soumis à vérification ; déterminer le nombre de valeurs de caractéristiques de contenu du contenu numérique soumis à vérification qui sont égales aux valeurs de caractéristiques de contenu du contenu numérique d'origine en fonction d'un résultat de comparaison ; et déterminer que le contenu numérique soumis à vérification est cohérent avec le contenu d'origine si le nombre de valeurs de caractéristiques de contenu égales excède un certain seuil.

2. Procédé selon la revendication 1, comprenant en outre les étapes consistant à :
s'il existe de multiples valeurs de caractéristiques du contenu numérique d'origine et de multiples valeurs de caractéristiques du contenu numérique soumis à vérification, comparer une à une les valeurs de caractéristiques du contenu numérique d'origine aux valeurs de caractéristiques du contenu numérique soumis à vérification ;
déterminer le nombre de valeurs de caractéristiques du contenu numérique soumis à vérification qui sont égales aux valeurs de caractéristiques du contenu numérique d'origine en fonction d'un résultat de comparaison ; et
déterminer que le contenu numérique soumis à vérification est cohérent avec le contenu numérique d'origine si le nombre de valeurs de caractéristiques du contenu numérique soumis à vérification qui sont égales aux valeurs de caractéristiques du contenu numérique d'origine excède un certain seuil.

3. Appareil permettant de vérifier la cohérence de contenus numériques, l'appareil comprenant :
un premier module d'extraction (70), conçu pour extraire des valeurs de caractéristiques d'un contenu numérique d'origine ;
un deuxième module d'extraction (71), conçu pour extraire des valeurs de caractéristiques d'un contenu numérique soumis à vérification ;
un module de comparaison (72), conçu pour comparer les valeurs de caractéristiques extraites par le premier module d'extraction (70) du contenu numérique d'origine aux valeurs de caractéristiques extraites par le deuxième module d'extraction (71) du contenu numérique soumis à vérification, et
un premier module de détermination (73), conçu pour déterminer que le contenu numérique soumis à vérification est cohérent avec le contenu numérique d'origine en fonction d'un résultat de comparaison du module de comparaison (72) ;
s'il existe de multiples valeurs de caractéristiques du contenu numérique d'origine et de multiples valeurs de caractéristiques du contenu numérique soumis à vérification, lequel module de comparaison (72) est en outre conçu pour comparer une à une les valeurs de caractéristiques du contenu numérique d'origine aux valeurs de caractéristiques du contenu numérique soumis à vérification ; et
lequel premier module de détermination (73) comprend :
une troisième unité de détermination (731), conçue pour déterminer le nombre de valeurs de caractéristiques du contenu numérique soumis à vérification qui sont égales aux valeurs de caractéristiques du contenu numérique d'origine en fonction d'un résultat de comparaison du module de comparaison (72) ; et
une quatrième unité de détermination (732), conçue pour déterminer que le contenu numérique soumis à vérification est cohérent avec le contenu numérique d'origine si le nombre de valeurs de caractéristiques du contenu numérique soumis à vérification qui sont égales aux valeurs de caractéristiques du contenu numérique d'origine excède un certain seuil ;
lesquelles valeurs de caractéristiques comprennent des valeurs de caractéristiques de condensé et des valeurs de caractéristiques de contenu,
lequel module de comparaison (72) comprend en outre : une première unité de comparaison (721), conçue pour comparer une à une des valeurs de caractéristiques de condensé du contenu numérique d'origine à des valeurs de caractéristiques de condensé du contenu numérique soumis à vérification ;
laquelle troisième unité de détermination (731) est en outre conçue pour déterminer le nombre de valeurs de caractéristiques de condensé du contenu numérique soumis à vérification qui sont égales aux valeurs de caractéristiques de condensé du contenu numérique d'origine en fonction d'un résultat de comparaison de la première unité de comparaison (721) ;
laquelle quatrième unité de détermination (732) est en outre conçue pour déterminer que le contenu numérique soumis à vérification est cohérent avec le contenu numérique d'origine si le nombre de valeurs de caractéristiques de condensé égales excède le seuil ;
lequel module de comparaison (72) comprend en outre : une deuxième unité de comparaison (722), conçue pour comparer une à une des valeurs de caractéristiques de contenu du contenu numérique d'origine à des valeurs de caractéristiques de contenu du contenu numérique soumis à vérification, si le nombre de valeurs de caractéristiques de condensé égales n'excède pas le seuil ;
laquelle troisième unité de détermination (731) est en outre conçue pour déterminer le nombre de valeurs de caractéristiques de contenu du contenu numérique soumis à vérification qui sont égales aux valeurs de caractéristiques de contenu du contenu numérique d'origine en fonction d'un résultat de comparaison de la deuxième unité de comparaison (722) ; et
laquelle quatrième unité de détermination (732) est en outre conçue pour déterminer que le contenu numérique soumis à vérification est cohérent avec le contenu numérique d'origine si le nombre de valeurs de caractéristiques de contenu excède le seuil.

4. Produit-programme d'ordinateur, comprenant un code de programme d'ordinateur qui, lors de son exécution par un ordinateur, lui fera mettre en oeuvre les étapes selon l'une quelconque des revendications 1 et 2.
